Europäisches Patentamt

European Patent Office

Office européen des brevets

(11) Publication number: **0 172 191**
**B1**

(12) EUROPEAN PATENT SPECIFICATION

(45) Date of publication of patent specification: 27.12.89

(51) Int. Cl.⁴: **C 08 B 15/10**

(21) Application number: 85900924.3

(22) Date of filing: 29.01.85

(86) International application number:
PCT/US85/00142

(87) International publication number:
WO 85/03509 15.08.85 Gazette 85/18

(54) Modified cellulose fibres.

(30) Priority: 03.02.84 US 576828

(43) Date of publication of application:
26.02.86 Bulletin 86/09

(45) Publication of the grant of the patent:
27.12.89 Bulletin 89/52

(84) Designated Contracting States:
BE DE FR GB

(56) References cited:
US-A-3 029 232
US-A-3 035 045
US-A-4 066 828
US-A-4 117 222
US-A-4 339 331

Chemical Abstracts, volume 86, no. 20, 16 May
1977, Columbus, Ohio (US) Solarz Malgorzata:
"Modification of cellulose fibers with N,N'
methylene-bisacrylamide", see page 75, abstract
141502c, Przegl. Wlok. 1976, 30(11-12) pages
546-9

(73) Proprietor: SCOTT PAPER COMPANY
Industrial Highway Tinicum Island Road Tinicum
Township
Delaware County, PA 19113 (US)

(72) Inventor: BOX, Larry
90 Andrien Road
Glen Mills, PA 19342 (US)

(74) Representative: Wuesthoff, Franz, Dr.-Ing. et al
Patentanwälte Wuesthoff -v. Pechmann-
Behrens-Goetz Schweigerstrasse 2
D-8000 München 90 (DE)

Note: Within nine months from the publication of the mention of the grant of the European patent, any person may
give notice to the European Patent Office of opposition to the European patent granted. Notice of opposition shall
be filed in a written reasoned statement. It shall not be deemed to have been filed until the opposition fee has been
paid. (Art. 99(1) European patent convention).

Courier Press, Leamington Spa, England.

## Description

This invention relates to the modification of polysaccharide materials in the form of cellulosic fines by treatment with an amide. Webs comprising such modified fines and untreated fibers exhibit increased bulk and absorbency. The term "fines" means cellulosic fibers less than 2 mm in length.

## Definitions

For purposes of this invention, a water-wettable polysaccharide is one which is either insoluble in water or capable of absorbing water and being swollen thereby. These include fibrous cotton and wood pulps, fine-cut cotton and wood pulps, activated polysaccharides such as oxidized cellulose; hydrolyzed polysaccharides such as hydrocelluloses; and various water-insoluble derivatives of cellulose, such as carboxymethyl cellulose. As used herein, the term "cellulosic fibers" refers to fibers comprising cellulose, a linear polysaccharide, whether derived from natural materials such as wood pulp, bagasse and cotton linters or synthetic forms such as viscose rayon.

## Summary of the invention

The present invention relates to novel polysaccharide materials and a method for preparing them comprising the reaction product of water-wettable cellulosic fibers in the form of fines with N,N'-methylenebisacrylamide. The reaction may be carried out by combining the N,N'-methylenebisacrylamide in an aqueous alkaline medium having a pH between 8.5 and 13.5 with an aqueous slurry of the fibers or by applying it in the form of a solution to a batt of cellulosic fibers. The reaction may be allowed to proceed for several days at ambient temperature, for example 25°C, or can be brought to completion within hours or minutes at elevated temperatures.

In accordance with the method of the present invention, the reaction is carried out in an aqueous alkaline medium having a pH between 8.5 and 13.5 and preferably between 11 and 13, using either an aqueous slurry of cellulosic fibers in the form of fines or by applying the N,N'-methylenebisacrylamide to a batt of cellulosic fibers known as pulp lap. Less preferably, the reaction can be carried out in an anhydrous medium using an organic solvent such as acetone, in the presence of alkali. The amount of N,N'-methylenebisacrylamide to be employed in the reaction with the cellulosic fibrous material should be sufficient to impart the desired increase in bulk and absorbency. Above about 25% N,N'-methylenebisacrylamide by dry weight of the fines there is no additional affect on the fines. Insufficient N,N'-methylenebisacrylamide below 0.2%, will produce no perceptible change in the bulk or total water absorption of a web of the fines, although any measurable amount of N,N'-methylenebisacrylamide produces a measurable increase in absorbency i.e. the rate of absorption. In practice from about 0.5 to 2% by dry weight of the fines produces a level of modification sufficient for commercial applications. The novel modified fines of this invention may be used in combination with conventional papermaking fibers to produce webs which exhibit increased bulk and absorbency. The modified fines of the present invention improve the bulk and absorbency of the base web in direct proportion to the percentage of modified fines in the blend.

Alternatively, blending can permit a reduction in basis weight while retaining bulk and absorbency. By way of illustration, in a web containing 30% modified fines, basis weight was reduced by 25% without loss of bulk and absorbency as compared with a web without modified fines of the present invention. Another utility of the fibers of the invention is as a replacement for any of the known super absorbent fibers such as the "super slurper" fibers for use in a variety of absorbent products such as diapers, sanitary napkins, hospital dressings and the like. A further advantage of the present invention is that the modified fines exhibit wet resilience. That is to say, the fines retain their bulk when wet which is important in many absorbent products, such as diapers, where the shape and volume of the product when wet plays an important part in the function of the product e.g. in retaining fit and wicking.

The present inventor is unaware of any disclosure in the prior art which would suggest such results. Indeed, several other amides and acrylates were tried but did not produce clear improvements in absorbency and bulk. These compounds include

> Acrylamide
> N-methylolacrylamide
> Bisacrylamide glyoxal
> N-Isopropylacrylamide
> N-N Dimethylamino ethyl methacrylate
> Triallylcyanurate
> Glycidyl acrylate
> Acrylic acid

Treatment of cellulosic fines in accordance with the present invention results in extended hydrophilicity, increased brightness and receptivity to ink, and in fibers which are more readily debonded. There is at the same time no perceptible change in the structural appearance of the fibers. These improved properties are retained by the fibers when subjected to typical stress to which pulp fibers are subjected, for example, boiling water, moderately strong acid and alkali, and bleaching chemicals. Bleaching with chlorine, chlorine dioxide, hydrogen peroxide, ozone and combinations of such bleaching steps will not undo the fiber modification. However, successive stages of alkaline treatment such as alkaline extraction—hypochlorination—alkaline extraction will destroy the properties.

The method of the present invention is not limited to any particular type of cellulosic fiber and has been successfully employed on a wide variety of wood pulp fines, both chemical and mechanical, hardwood and softwood, bagasse, secondary (recovered waste paper) and rayon staple fibers. In one embodiment of the present invention, the N,N'-methylenebisacrylamide reagent is combined with the sodium hydroxide used for the second extraction stage during a bleaching sequence such as CEHED, chlorine-alkaline extraction—hypochlorite-alkali extraction—chlorine dioxide or CEDED, chlorine-alkali extraction—chlorine dioxide-alkali extraction—chlorine dioxide. The temperature e.g. 60°C, and duration, typically one hour, of such a stage are sufficient for the modification reaction to be completed. The final bleach stage (chlorine dioxide) serves as a neutralization and washing step.

The intensity of overall improvement is greater in the wood pulps produced by "high yield" or mechanical pulping processes, e.g. thermomechanical and refiner mechanical pulps, which are characterized in having larger hemicellulose and carbohydrate contents than chemical pulp. Since, as previously mentioned, the modification imparted to cellulosic fibers by N,N'-methylenebisacrylamide survives delignification treatments, the aforementioned preference for treatment of "high yield" or mechanical pulps can be advantageously combined with a delignification step, either prior to or subsequent to application of the method of the present invention.

Mechanical pulps are desirable in that they are produced in high yield, but have found limited use in absorbent paper products due to their rigid structure. In the past, attempts have been made to produce fibers which have enhanced flexibility compared to groundwood, refiner mechanical pump, thermomechanical pulp, chemi-refiner and chemi-thermomechanical pulp though delignification. Unfortunately, total or partial delignification produces pulps with reduced bulk. The latter phenomenon is disadvantageous when the end-use of the fiber is in absorbent products.

In accordance with the present invention mechanical fines can be made flexible while maintaining or improving their bulk characteristics. These fibers are subjected to, for example, ozonization whereby at least partial delignification is achieved, resulting in low bulk high-bonding fibers, which upon subsequent treatment in accordance with the present invention results in a pulp with high brightness, bulk and flexibility. Alternatively, the method of the present invention can be applied prior to the delignification stage. In this connection, it is to be noted that fibers treated in accordance with the present invention exhibit sharp reductions in bleach chemical demand.

A further advantage of the present invention is that when cellulosic fines are modified in accordance with the present invention, they become non-bonding and dispersible. This feature has significant economic implications. In particular, it permits the use of pulp furnishes containing a high proportion of fines without the normal difficulties. Wood fines, an assortment of particulate wood products which pass through a 75 micron opening, exhibit rather noticeable adhesive properties uncommon to regular wood fibers. Consequently, when isolated and dried they form a dense agglomerated structure which resists being dispersed in water. In this agglomerated state, fines interfere with both the manufacture of absorbent papers and their product qualities. When fines are treated in accordance with the present invention, they become soft and dispersible in water after drying. By way of illustration, a stone ground wood pulp containing 23% fines, when formed into a mat from an aqueous dispersion, dried into a rough textured non-dispersible mass. When the same pulp was treated in accordance with the method of present invention with 2.5% N,N'-methylenebisacrylamide based on dry pulp weight, neutralized and dried, the treated fines were found to be soft and dispersible.

## Claims

1. Modified polysaccharide materials comprising a water-wettable polysaccharide in the form of cellulosic fibers reacted with N,N'-methylenebisacrylamide, characterized in that said fibers are fines, i.e. cellulosic fibers with less than 2 mm in length, and that said fines are reacted with 0.2 to 25% N,N'-methylenebisacrylamide by dry weight of said fines.

2. A method for preparing modified polysaccharide materials, which comprises the steps of reacting a water-wettable polysaccharide in the form of cellulosic fibers with N,N'-methylenebisacrylamide in an aqueous alkaline medium having a pH between 8.5 and 13.5, characterized in that said fibers are fines, i.e. said cellulosic fibers have a length less than 2 mm, and that said fines are reacted with 0.2 to 25% N,N'-methylenebisacrylamide by dry weight of the fines.

3. The method of claim 2, characterized in that the pH is between 11 and 13.

4. The method of one of the claims 2 or 3, characterized in that said reaction is carried out at ambient temperature for two weeks.

5. The method of one of the claims 2 or 3, characterized in that said reaction is carried out at 55°C for six hours.

## Patentansprüche

1. Modifizierte Polysaccharid-Materialien, umfassend ein wassernetzbares Polysaccharid in Form von Cellulosefasern, die umgesetzt sind mit N,N'-Methylenbisacrylamid, dadurch gekennzeichnet, daß diese Fasern kurzfaserig sind, d.h. Cellulosefasern mit einer Länge von weniger als 2 mm, und daß diese feinen Teilchen mit 0,2 bis 25% N,N'-Methylenbisacrylamid, bezogen auf das Trockengewicht der kurzen Fasern, umgesetzt sind.

2. Verfahren zur Herstellung von modifizierten Polysaccharid-Materialien, umfassend die Stufen der Umsetzung eines wassernetzbaren Polysaccharids in Form von Cellulosefasern mit N,N'-Methylenbisacrylamid in einem wäßrigen alkalischen Medium mit einem pH-Wert zwischen 8,5 und 13,5, dadurch gekennzeichnet, daß die Fasern kurzfaserig sind, d.h. Cellulosefasern mit einer Länge von weniger als 2 mm, und daß diese kurzen Fasern umgesetzt sind mit 0,2 bis 25% N,N'-Methylenbisacrylamid, bezogen auf das Trockengewicht der kurzen Fasern.

3. Verfahren nach Anspruch 2, dadurch gekennzeichnet, daß der pH-Wert zwischen 11 und 13 liegt.

4. Verfahren nach einem der Ansprüche 2 oder 3, dadurch gekennzeichnet, daß diese Reaktion bei Umgebungstemperatur während 2 Wochen durchgeführt wird.

5. Verfahren nach einem der Ansprüche 2 oder 3, dadurch gekennzeichnet, daß diese Reaktion 6 h bei 55°C durchgeführt wird.

**Revendications**

1. Matières polysaccharidiques modifiées comprenant un polysaccharide mouillable à l'eau sous forme de fibres cellulosiques que l'on a fait réagir avec le N,N'-méthylènebisacrylamide, caractérisées en ce que lesdites fibres sont des fines, c'est-à-dire des fibres cellulosiques ayant moins de 2 mm de longueur, et en ce qu'on fait réagir lesdites fines avec de 0,2 à 25% de N,N'-méthylènebisacrylamide en poids sec desdites fines.

2. Procédé de préparation de matières polysaccharidiques modifiées, comprenant les étapes de réaction d'un polysaccharide mouillable à l'eau sous forme de fibres cellulosiques avec le N,N'-méthylènebisacrylamide dans un milieu alcalin aqueux ayant un pH compris entre 8,5 et 13,5, caractérisé en ce que lesdites fibres sont des fines, c'est-à-dire que lesdites fibres cellulosiques ont une longueur inférieure à 2 mm, et en ce qu'on fait réagir lesdites fines avec 0,2 à 25% de N,N'-méthylènebisacrylamide en poids sec des fines.

3. Procédé de la revendication 2, caractérisé en ce que le pH est compris entre 11 et 13.

4. Procédé de l'une des revendications 2 ou 3, caractérisé en ce que ladite réaction est conduite à la température ambiante pendant deux semaines.

5. Procédé de l'une des revendications 2 ou 3, caractérisé en ce que ladite réaction est conduite à 55°C pendant six heures.